## Europäisches Patentamt

## European Patent Office

## Office européen des brevets

(11) Veröffentlichungsnummer : **0 021 189**
**B1**

(12) **EUROPÄISCHE PATENTSCHRIFT**

(45) Veröffentlichungstag der Patentschrift :
**11.05.83**

(21) Anmeldenummer : **80103156.8**

(22) Anmeldetag : **06.06.80**

(51) Int. Cl.³ : **A 22 C 13/00**, A 22 C 13/02

(54) Insbesondere für die Wurstherstellung geeignete funktionelle Einheit und Verfahren zu ihrer Herstellung.

(30) Priorität : **08.06.79 DE 2923188**

(43) Veröffentlichungstag der Anmeldung :
**07.01.81 Patentblatt 81/01**

(45) Bekanntmachung des Hinweises auf die Patenterteilung : **11.05.83 Patentblatt 83/19**

(84) Benannte Vertragsstaaten :
**AT BE CH DE FR GB IT LI NL SE**

(56) Entgegenhaltungen :
**DE A 2 511 770**
**DE A 2 733 996**
**DE B 1 217 238**
**FR A 2 303 480**

(73) Patentinhaber : **HOECHST AKTIENGESELLSCHAFT**
**Postfach 80 03 20**
**D-6230 Frankfurt/Main 80 (DE)**

(72) Erfinder : **Lenhart, Richard**
**Dahlenweg 4**
**D-6200 Wiesbaden-Frauenstein (DE)**
Erfinder : **Köstner, Armin**
**Am Hohen Stein 36**
**D-6200 Wiesbaden (DE)**
Erfinder : **Gerigk, Günter, Dr.**
**Wintersteinstrasse 6**
**D-6370 Oberursel (DE)**
Erfinder : **Bittner, Klaus-Jürgen**
**Am Hohen Stein 16**
**D-6200 Wiesbaden (DE)**

EP 0 021 189 B1

## Insbesondere für die Wurstherstellung geeignete funktionelle Einheit und Verfahren zu ihrer Herstellung

Die Erfindung bezieht sich auf eine funktionelle Einheit von der im Oberbegriff des Anspruchs 1 genannten Art und auf ein Verfahren zu ihrer Herstellung.

Fleischzubereitungen in Form von Wurstmasse kommen in künstlichen Wursthüllen abgefüllt in großen Mengen auf den Markt. Als Material für die künstlichen Wursthüllen wird insbesondere faserverstärktes Cellulosehydrat, Kollagen oder synthetisches Polymerisat wie beispielsweise Polyester oder Polyamid bevorzugt.

Bei der Herstellung von Würsten geht man von Schlauchstücken vorbestimmter Länge aus, beispielsweise von Schlauchstücken von ca. 20 m ; diese Schläuche werden in bekannter Weise mittels üblicher Vorrichtungen, beispielsweise unter dichter Fältelung zu hohlzylindrischen, beidseitig offenen Stäben gerafft und dabei bzw. danach längsaxial zusammengepreßt. Nach Raffung der oben genannten Schlauchlänge weist der aus ihr gebildete Hohlstab eine Länge von ca. 40 cm auf.

Zum Befüllen des den Hohlstab bildenden Schlauchs mit Wurstmasse wird der Hohlstab zunächst an einem Ende verschlossen und dann mit seiner offenen Seite voran auf den Füllstutzen einer Wurstabfüllmaschine aufgeschoben. Aus dem Füllrohr wird dann Wurstmasse unter Preßdruck in den Stabhohlraum eingepreßt, wobei der den Hohlstab bildende gefältelte Schlauch nach Maßgabe der eingepreßten Wurstmasse fortlaufend entfältelt und dabei zugleich befüllt wird.

Die verwendeten Hohlstäbe haben zwar herstellungsbedingt eine gewisse Eigensteifigkeit, sie sind jedoch empfindlich gegen Biegebeanspruchung und brechen leicht in zwei oder in mehrere Teile, die untereinander durch entfältelte Schlauchbereiche verbunden sind. Der den Hohlstab bildende, geraffte Schlauch wird beim Entfälteln während des Befüllvorgangs mechanisch stark beansprucht. Aus diesem Grunde werden Hohlstäbe, die aus gerafftem Schlauch aus Cellulosehydrat bestehen, vor ihrer Befüllung gewässert, um sie geschmeidig zu machen.

Infolge der Wasseraufnahme des Schlauchs und Quellung desselben, besteht die Gefahr, daß unerwünschte Längenausdehnung des Hohlstabs eintritt und dieser bei seiner weiteren Handhabung beschädigt wird.

Die Gefahr, daß der Hohlstab bei seiner Handhabung seine ursprüngliche Form und Abmessung infolge der genannten Einwirkung verliert, ist dann besonders groß, wenn der den Hohlstab bildende Schlauch relativ dickwandig ist. beispielsweise eine Dicke von 0,07 mm aufweist, der Schlauch einen verhältnismäßig großen Innendurchmesser besitzt, beispielsweise einen solchen von 40 mm.

In der DE-A-25 10 637 ist eine funktionelle Einheit der genannten Art beschrieben. Die die Umstülpungen bildenden Hüllenüberstände weisen jedoch keine deren selbständige Rückstülpung verhindernde Elemente auf. Es besteht deshalb Gefahr unkontrollierbarer, wenigstens teilweiser Rückstülpung der Hüllenüberstände und unerwünschter Lockerung des Sitzes der Stützhülle um bzw. am Hohlstab, so daß die Stützhülle ihre Funktion bezüglich der Fixierung von Form bzw. Abmessung des Hohlstabes und seiner räumlichen Anordnung in der Stützhülle, insbesondere bei gewässerten Hohlstäben, nicht mehr hinreichend erfüllen kann.

Der Erfindung liegt die Aufgabe zugrunde, diese bekannte funktionelle Einheit derart baulich konstruktiv weiterzubilden, daß die durch Kreisringscheiben umfassende Hüllenüberstandsumstülpungen gebildeten Enden der Stützhülle bezüglich ihrer baulichen Ausbildung auch ohne Zuhilfenahme zusätzlicher Elemente, wie beispielsweise Spannringe, gegen selbständige Änderung ihrer Form sowie ihrer räumlichen Anordnung bzw. Lage zum Hohlstab gesichert sind.

Die der Erfindung zugrunde liegende Aufgabe wird gelöst durch die in den Ansprüchen 1 und 3 angegebenen funktionellen Einheiten und das in Anspruch 11 beschriebene Verfahren zu deren Herstellung. Die Unteransprüche 2 bzw. 4 bis 10 geben weitere Ausbildungen der funktionellen Einheiten an.

Es war zwar bereits aus der DE-A-27 33 996 ein Verfahren bekannt, bei dem die Enden einer Folie, welche als Hülle für eine hohlzylindrische Schlauchraupe Verwendung findet, einem thermischen Schrumpfungsprozeß unterzogen werden. Eine Anregung, wie man das der vorliegenden Erfindung zugrundeliegende Problem lösen könnte, nämlich die Rückstülpung der Hüllenüberstände zu verhindern, kann dieser Druckschrift allerdings nicht entnommen werden. Dies liegt daran, daß diese Aufgabe weder angesprochen noch gelöst wird, vielmehr werden nur Ausführungsformen von Hüllenüberständen gezeigt, welche nicht in Richtung zur Hohlstabmitte umgestülpt sind, sondern sich vom Hohlstab weg erstrecken, bei denen folglich das Problem der Hüllenrückstülpung überhaupt nicht auftreten kann.

Eine Warmformung des Hüllenüberstandes zur Lösung der Aufgabe der Erfindung lag aber auch deshalb nicht nahe, da an sich damit zu rechnen war, daß bei der Warmformung des Hüllenüberstandes der Verpackungsschlauch durch die Hitzeeinwirkung beschädigt werden oder zumindest qualitativ verschlechtert werden könnte. Insbesondere bei Verpackungsschläuchen aus Cellulosehydrat mußte man annehmen, daß durch die Warmformung des Hüllenüberstandes ein Wasserverlust und damit eine Versprödung des Schlauches eintreten würde.

Wenn nun nach der Erfindung eine Warmformung des Hüllenüberstandes vorgeschlagen wird, so wird damit ein vorherrschendes Vorurteil überwunden, denn es hat sich überraschenderweise herausgestellt, daß durch die im vorliegenden Anspruch 3 angegebene Warmformung, die auf bestimmte Zonen der Hüllenüberstände beschränkt ist, die zu erwartende negative Veränderung des Verpackungsschlauches nicht eintritt.

Es konnte der DE-A-27 33 996 auch nicht entnommen werden, nur bestimmte Zonen der Hüllenüberstände durch Warmformung permanent formstabil auszubilden, denn es ist nicht vorhersehbar, daß bereits unter diesen Umständen eine Rückstülpung des Hüllenüberstandes unterbleibt.

Der den Hohlstab umgebende, erfindungsgemäß ausgebildete Stützbehälter ist infolge der eigenartigen baulichen Ausprägung seiner Enden selbständig form- und dimensionsgesichert ausgebildet.

Unter bestimmungsgemäßer Verwendung der funktionellen Einheit soll deren Lagerung, Transport sowie Wasserbeaufschlagung zum Zwecke der Wässerung des Hohlstabs bzw. des ihn bildenden Schlauchs verstanden werden.

Die funktionelle Einheit umfasst einen durch längsweise Raffung einer Länge Verpackungsschlauch aus bevorzugt faserverstärktem Cellulosehydrat gebildeten selbsttragenden Hohlstab, eine aus einem einzigen Stück bevorzugt gitterartig strukturiert aufgebaute schlauchförmige Hülle mit kreisförmigem Querschnitt aus warmformbarem sowie wärmeverschweißbarem thermoplastischem Kunststoff, die bevorzugt latentes durch Wärmeeinwirkung auslösbares Schrumpfvermögen aufweist, als Stützbehälter für den in ihrem Hohlraum angeordneten Hohlstab sowie Kreisringscheiben zur Fixierung der Anordnung des Stützbehälters am bzw. um den Hohlstab.

Die Wanddicke der den Stützbehälter bildenden schlauchförmigen Hülle ist nicht wesentlich, sofern durch diese gewährleistet ist, daß die Hülle ihre Stützfunktion zu erfüllen vermag.

Die den Stützbehälter bildende schlauchförmige Hülle besteht aus warmformbarem, thermoplastischem vorteilhafterweise wärmeverschweißbarem Polymerisat, bevorzugt besteht sie aus Polyamid, Polyvinylchlorid, insbesondere bevorzugt aus Polyolefin, ganz besonders bevorzugt aus Polyäthylen.

Die Länge des den Stützbehälter insgesamt bildenden Hüllenstücks ist derart bemessen, daß es die Länge des Hohlstabs und zusätzlich eine Länge aufweist, die wenigstens dem doppelten Hohlstabdurchmesser und höchstens der halben Hohlstablänge entspricht. Der Innendurchmesser der den Stützbehälter bildenden Hülle ist dem Außendurchmesser des Hohlstabs angepaßt. Der Stützbehälter umgibt den Hohlstab unter Freilassung seiner Hohlraummündungen.

Der unmittelbar an die Hohlstabumfangsfläche angrenzende Teil der den Stützbehälter bildenden schlauchförmigen Hülle bzw. des Stützbehälters wird als Stützbehältermantel bezeichnet. Bei Stützbehältern aus einer Hülle mit durch Wärmeeinwirkung auslösbarer Schrumpffähigkeit ist diese im Bereich des Stützbehältermantels nicht ausgelöst.

Die sich längsaxial jeweils über die Enden des Stützbehältermantels hinaus erstreckenden integralen Hüllenüberstände sind jeweils an den Stützbehältermantel angrenzende Bereiche und bilden integrale kreisringförmige, im wesentlichen plane, den Stützbehälterhohlraum jeweils endseitig begrenzende Stützbehälterstirnwände.

Auf der dem Hohlstab abgewandten Seite jeder Stützbehälterstirnwand liegt jeweils eine hinreichende Eigensteifigkeit aufweisende Kreisringscheibe mit zentraler Kreisringöffnung. Sie besteht aus thermoplastischem vorteilhafterweise wärmeverschweißbarem Kunststoff, beispielsweise aus Polyamid, Polyvinylchlorid, insbesondere bevorzugt aus Polyäthylen oder Polypropylen ; vorteilhaft bestehen die Kreisringscheiben aus demselben Kunststoff, aus dem der Stützbehälter besteht. Die Dicke der Kreisringscheibe ist nicht wesentlich, sofern sie eine für die formstabilisierende Funktion des Stützbehälters hinreichende Eigensteifigkeit aufweist.

Die Kreisringscheibe besitzt zwei plane Oberflächen, die als äußere und innere Stirnfläche bezeichnet werden, eine äußere Umfangsfläche und eine Kreisringfläche in der Kreisringöffnung.

Der Außendurchmesser der Kreisringscheibe ist dem Außendurchmesser des Hohlstabs, ihr Kreisringdurchmesser dem Durchmesser der zentralen Kreisöffnung der Stützbehälterstirnwand angepaßt.

Der Durchmesser des Kreisrings ist demnach geringer als der Außendurchmesser der den Stützbehälter bildenden schlauchförmigen Hülle, so daß die Kreisringfläche der Kreisringscheibe jeweils preßeng an den Hüllenüberstand angrenzt.

Der vom Bereich der kreisförmigen, den inneren Umfang der Stützbehälterstirnwand begrenzenden Kante sich erstreckende integrale Hüllenüberstand ist jeweils durch die Kreisringscheibe und vorteilhafterweise um etwa 180° in Richtung zur Hohlstabmitte umgebogen, ihre Enden werden durch kreisförmige Schnittkanten gebildet.

Der Hüllenüberstand umschließt dabei jeweils die an der Stützbehälterstirnwand angeordnete Kreisringscheibe teilweise derart, daß er an deren Kreisringfläche, ihre äußere Stirnfläche, die den Hohlstabenden abgewandt ist, sowie an ihrer äußeren Umfangsfläche angrenzt. Wenigstens mit dem endnahen Bereich grenzt der Hüllenüberstand an den Stützbehältermantel an.

Der an die äußere Umfangsfläche der jeweiligen Kreisringscheibe sowie an den Stützbehältermantel angrenzende Teil des Hüllenüberstandes wird in seiner Gesamtheit als hohlzylindrischer Umstülpungsteil bezeichnet ; die Länge des hohlzylindrischen Umstülpungsteils ist höchstens halb so lang wie der Hohlstab.

Der jeweils zur äußeren Stirnfläche der Kreisringscheibe parallel und unmittelbar daran angrenzend verlaufende kreisförmige Bereich des Hüllenüberstandes bildet eine plane oder gebogene kreisringförmige Stützbehälterfrontwand ; diese wird jeweils an ihrem äußeren sowie an ihrem inneren Umfang durch Frontwandumstülpungskanten begrenzt, wobei die Frontwand jeweils im Bereich ihrer äußeren Umfangskante integral in den hohlzylinderförmigen Umstülpungsteil und im Bereich ihrer inneren Umfangskante jeweils in den integralen Teil des Hüllenüberstands übergeht, der an die Kreisringfläche der Kreisringöffnung angrenzt.

Die jeweilige Stützbehälterstirnwand sowie Stützbehälterfrontwand bzw. die diese jeweils begrenzenden Umfangskanten erstrecken sich jeweils in Ebenen, zu denen die Längsachse des Stützbehälters zumindest annähernd einen rechten Winkel bildet.

Es ist erfindungswesentlich, daß wenigstens die den äußeren Umfang der jeweiligen Stützbehälterfrontwand begrenzende Kante durch Warmformung permanent formstabil ausgebildet ist, bevorzugt ist zusätzlich auch die innere Umfangsbegrenzungskante der Stützbehälterfrontwand durch Warmformung permanent formstabil ausgebildet.

Es ist auch vorteilhaft, wenn zusätzlich zu den durch Warmformung permanent formstabil ausgebildeten Umfangsbegrenzungskanten der jeweiligen Stützbehälterfrontwand wenigstens die innere Umfangsbegrenzungskante der Stützbehälterstirnwand durch Warmformung permanent formstabil ausgebildet ist, insbesondere bevorzugt ist sowohl die den äußeren als auch die den inneren Umfang der jeweiligen Stützbehälterstirnwand begrenzende Umstülpungskante durch Warmformung permanent formstabil ausgebildet.

Definitionsgemäß sollen wie vorstehend angegeben baulich konkretisierte Stützbehälterstirn- sowie Stützbehälterfrontwände als durch Warmformung permanent formstabil ausgebildet gelten.

In bevorzugter Ausführungsform ist der Stützhüllenüberstand wenigstens in Teilbereichen sowie wenigstens punktuell mit der Kreisringscheibe durch Warmverschweißung oder Siegelung verbunden ; vorteilhaft ist auch die Stützbehälterstirnwand mit der inneren Stirnfläche der Kreisringscheibe durch Warmverschweißung wenigstens punktuell verbunden. Bevorzugt ist auch der Stützbehältermantel mit dem angrenzenden hohlzylindrischen Umstülpungsteil durch Warmverschweißung wenigstens punktuell verbunden.

Die erfindungsgemäße Ausbildung der Hüllenüberstände ist auch durch die Merkmale der zu ihnen führenden Herstellungsweise charakterisierbar.

Die Bezeichnung « durch Warmformung permanent formstabil ausgebildet » bedeutet in Bezug auf die baulich strukturelle Ausbildung der Hüllenüberstände, daß die Stützbehälterenden bei bestimmungsgemäßer Verwendung der funktionellen Einheit bei Temperaturen unterhalb des Erweichungspunktes des die Stützhülle bildenden thermoplastischen Materials ihre Gestalt und Abmessung nicht von selbst verändern. Die permanent formstabile Ausbildung der Stützbehälterenden verhindert eine unkontrollierte und unerwünschte Änderung der Form und Abmessung des Hohlstabs im Stützbehälterhohlraum bei der bestimmungsgemäßen Verwendung der funktionellen Einheit.

Bei der Verwendung der funktionellen Einheit im Rahmen der Wurstherstellung umfaßt die Verwendung auch das übliche Wässern eines Hohlstabs auf Basis von Cellulosehydrat, der im Hohlraum des Stützbehälters angeordnet ist.

Die in den Hüllenüberständen vorgesehenen kreisringförmigen Biegungen, nämlich die inneren und äußeren Umfangskanten der jeweiligen Stützbehälterstirnwand und der jeweiligen Stützbehälterfrontwand gelten definitionsgemäß durch Warmformung permanent formstabil ausgebildet, wenn die Hüllenüberstände bei Raumtemperatur jeweils nicht mehr in eine von permanent formstabilen Kanten freie Form umwandelbar sind, d. h. daß diese jeweils nach Rückstülpung bei Raumtemperatur und Entfernen der Kreisringscheiben nicht mehr in ihre ursprüngliche Gestalt in Form eines geraden Hohlzylinders ohne permanent formstabile radiale Kanten rückformbar sind.

Der Ausdruck « durch Warmformung ausgebildet » bezeichnet das Ergebnis einer Verfahrensmaßnahme bei der Herstellung der Stützbehälterenden und dient zur verfahrensbezogenen Sachcharakterisierung des permanent formstabilen Zustands der genannten Kanten.

Die durch Warmformung permanent formstabil ausgebildeten Umfangskanten im Bereich des Hüllenüberstands des Stützbehälters sind jeweils außen konvex gekrümmte Biegungen (Krümmungswinkel ca. 90°).

Die Herstellung der erfindungsgemäßen funktionellen Einheit wird nachfolgend beispielhaft beschrieben :

Als Ausgangsmaterialien werden ein Hohlstab aus längsweise gerafftem flexiblem Verpackungsschlauch, beispielsweise auf Basis von faserverstärktem Cellulosehydrat, und ein Stück schlauchförmiger flexibler Hülle mit über seine gesamte Länge gleichbleibendem kreisförmigen Querschnitt, beispielsweise netzartig strukturiert, auf Basis von Polyäthylen, und zwei formfesteigensteife Kreisringscheiben mit zentraler Kreisöffnung verwendet. Die Hülle zeigt ein durch Wärmeeinwirkung auslösbares Schrumpfvermögen. Der Innendurchmesser der schlauchförmigen Hülle ist dem Außendurchmesser des Hohlstabmantels angepaßt. Die Länge der Hülle wird der Länge des Hohlstabs in der Weise angepaßt gewählt, daß der im Hüllenhohlraum angeordnete Hohlstab jeweils endseitig von bevorzugt gleichlangen Hüllenüberständen überragt wird. Die Hüllenüberstände weisen beispielsweise jeweils eine Länge entsprechend dem doppelten Hohlstabdurchmesser auf.

Die Kreisringscheiben bestehen beispielsweise aus Polyäthylen, der Durchmesser der Kreisringöffnung ist jeweils geringer als der Hüllenaußendurchmesser, er ist dem Innendurchmesser des Hohlstabs angepaßt.

Der Hohlstab wird in den Hohlraum der Hülle in der Weise angeordnet, daß die Hohlstabenden jeweils von etwa gleichlangen Hüllenüberständen überragt werden. Auf den jeweiligen Hüllenüberstand wird dann eine Kreisringscheibe aufgeschoben und gegen die Hohlstabstirnwand angepreßt, so daß ein Teilbereich des Hüllenüberstands an der Hohlstabstirnwand anliegt.

Anschließend wird, unter Bedingungen, die eine Veränderung der Lage der Kreisringscheiben zum Hohlstab verhindern, der durch die Kreisringöffnung der Kreisringscheibe sich erstreckende Teil des Hüllenüberstands jeweils um die äußere Stirnfläche und Umfangsfläche der Kreisringscheibe in Richtung zur Hohlstabmitte umgestülpt, z. B. mit Hilfe einer am Überstandsende angreifenden, beispielsweise zangenartig ausgebildeten Vorrichtung. Vorteilhafterweise wird der Hüllenüberstand zugleich längsaxial gestrafft. Der Hüllenüberstand liegt dann jeweils an der inneren Stirnwand der Kreisringscheibe, an der Kreisringfläche, an der äußeren Stirnwand der Kreisringscheibe sowie an ihrer äußeren Umfangsfläche sowie vorteilhaft auch am Stützhüllenmantel an. Unter Bedingungen, die die Rückstülpung der Umstülpung verhindern, beispielsweise unter Verwendung klammerartig ausgebildeter Elemente, werden die Hüllenüberstände mit Wärme einer Temperatur beaufschlagt, die hinreicht, um die Umstülpungen in warmformbaren und gegebenenfalls warmverschweißbaren Zustand überzuführen.

Gegebenenfalls läßt man nach der Wärmebeaufschlagung auf die in noch warmformbaren Zustand befindlichen Hüllenüberstände wenigstens partiell Preßkraft einwirken, durch die sie an die Oberflächen der jeweiligen Kreisringscheibe sowie des Stützbehältermantels angepreßt werden, wodurch wenigstens partiell Wärmeverschweißung oder Siegelung zwischen Hüllenüberstand und diesen Oberflächen erfolgt. Diese Wärmeverschweißung oder Siegelung erfolgt z. B. punktuell mit einer beheizten Stempeleinrichtung.

Bei Verwendung wärmeschrumpffähiger schlauchartiger Hüllen erfolgt mit der Wärmebeaufschlagung wenigstens teilweise Auslösung der latenten Wärmeschrumpffähigkeit der Hüllenüberstände.

Nach der Wärmebeaufschlagung wird die funktionelle Einheit unter Bedingungen abgekühlt, die eine Formveränderung ihrer erwärmten Teile verhindern. Die Verhinderung der Formveränderung während des Abkühlvorgangs kann beispielsweise durch Verwendung entsprechend ausgebildeter mechanischer Halteelemente erfolgen.

Die Wärmebeaufschlagung der Hüllenüberstände bewirkt, daß diese sich den Konturen der Kreisringscheiben dort anpassen, wo sie an deren Oberflächen unmittelbar angrenzen. Nach Abkühlung der wärmebeaufschlagten Bereiche ist deren Gestalt permanent formstabil fixiert.

In einer weiteren Ausführungsform der Erfindung wird um den Hüllenüberstand im Bereich zwischen Kreisringscheibe und Stützbehältermantel ein radial elastischer Spannring, beispielsweise aus einem Gummiband oder elastischem Kunststoff, gelegt. Die Behälterenden werden dann mit Wärme beaufschlagt, deren Temperatur hinreicht, die Umstülpungen in warmformbaren Zustand überzuführen. Anschließend läßt man den wärmebeaufschlagten Bereich der Hüllenüberstände abkühlen.

Die Erfindung wird durch die in den Fig. 1 bis 5 gezeigten Beispiele erläutert.

In der Figur 1 ist eine funktionelle Einheit in Seitenansicht, teilweise im Schnittaufbruch, dargestellt.

Figur 2 zeigt den Teilbereich II der Fig. 1 in vergrößertem Maßstab.

Figur 3 zeigt den Teilbereich III der Fig. 1 in vergrößertem Maßstab.

Figur 4 zeigt den Teilbereich IV der Fig. 1 in vergrößertem Maßstab.

Figur 5 zeigt eine weitere Ausführungsform der funktionellen Einheit mit einem Spannring, wobei nur ihr Endbereich dargestellt ist.

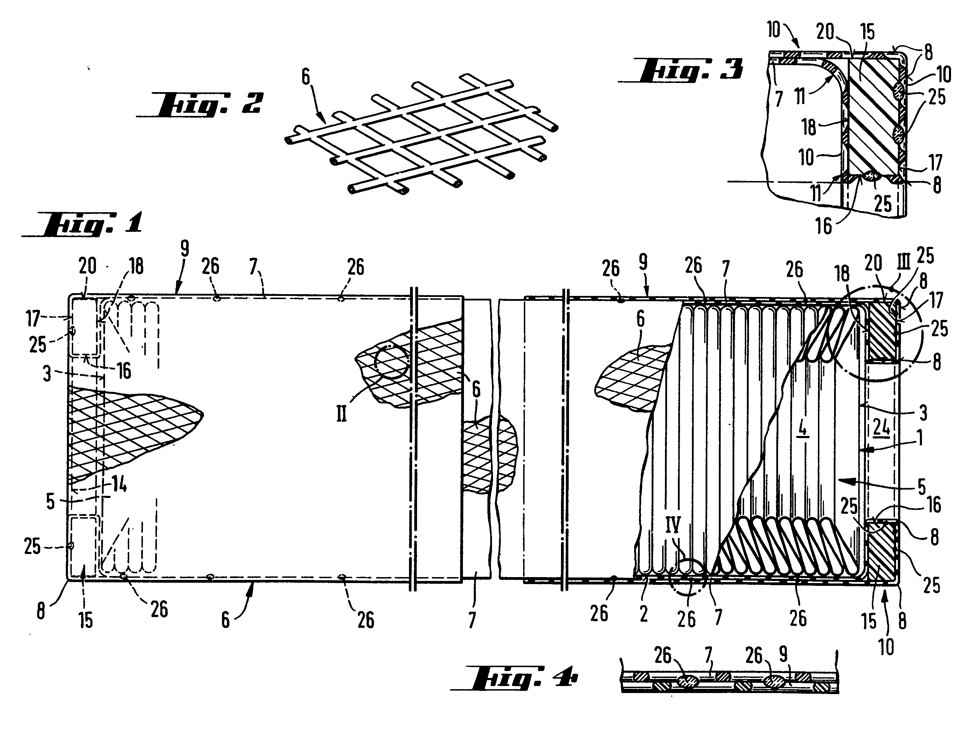

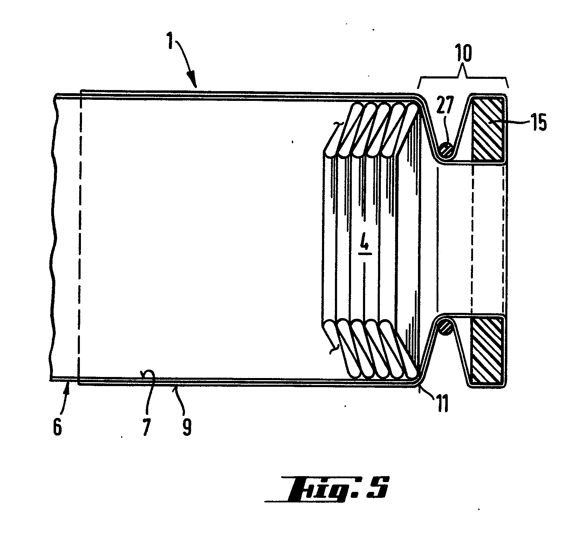

In der Fig. 1 ist der Hohlstab 1 aus längsweise gerafftem Verpackungsschlauch auf seiner äußeren Umfangsfläche 2 mit dem Stützbehältermantel 7 und auf seiner Stirnfläche 3 mit dem Hüllenüberstand 10 umgeben. Mit 4 ist der Hohlraum und mit 5 sind die Hohlraummündungen des Hohlstabs 1 bezeichnet. Der hohlzylinderförmige Stützbehälter ist ein Netzschlauch 6, der vom hohlzylindrischen Umstülpungsteil 9 umgeben ist. Der Hüllenüberstand 10 erstreckt sich anliegend an der Stirnfläche 3 des Hohlstabs 1 und an der inneren Stirnfläche 18 der Kreisringscheibe 15, durch die Kreisringöffnung 24 über die Kreisringfläche 16, über die äußere Stirnfläche 17 und über die äußere Umfangsfläche 20 der Kreisringscheibe 15. Die bevorzugt permanent formstabilen, gekrümmten Bereiche der Hüllenüberstände 10 sind mit 8, weitere vorteilhafterweise gekrümmte Bereiche mit 11 bezeichnet. Die punktförmigen Verschweißungen 25 und 26 verbinden den Hüllenüberstand 10 mit der Kreisringscheibe 15 bzw. den hohlzylindrischen Umstülpungsteil 9 des Hüllenüberstands 10 mit dem Stützbehältermantel 7. In den Fig. 2 bis 4 haben die Positionszahlen die gleiche Bedeutung wie in Fig. 1.

In Fig. 5 ist mit 27 der Spannring bezeichnet, der zwischen der Kreisringscheibe 15 und der Stirnfläche des Hohlstabs 1 angeordnet ist und eine Einschnürung des Hüllenüberstands 10 bildet.

**Ansprüche**

1. Insbesondere für die Wurstherstellung geeignete funktionelle Einheit, umfassend einen Hohlstab (1) aus längsweise gerafftem Verpackungsschlauch, einen die äußere Umfangsfläche (2) des Hohlstabs (1) unter Freilassung von dessen Hohlraummündungen (5) umgebenden Stützbehälter, der aus einer schlauchförmigen thermoplastischen Kunststoffhülle besteht und dessen jeweiliges Ende einen die Länge des Hohlstabs (1) überragenden Hüllenüberstand (10) bildet, und Kreisringscheiben (15) am jeweiligen Endes des Stützbehälters, wobei die an die Stirnflächen (3) des Hohlstabs (1) angrenzenden, auf die äußere Oberfläche des jeweiligen Hüllenüberstands (10) aufgeschobenen Kreisringscheiben (15) von einer Umstülpung des Hüllenüberstands (10) umfaßt sind und die Umstülpung sich vom Bereich der äußeren Umfangskante der Stirnfläche (3) des Hohlstabs (1) über die innere Stirnfläche (18) der Kreisringscheibe (15), durch deren Kreisringöffnung (24) über deren äußere Stirnfläche (17) und deren äußere Umfangsfläche (20) in Richtung zur Hohlstabmitte erstreckt, dadurch gekennzeichnet, daß der Hüllenüberstand (10) im Bereich der Umstülpung durch Warmformung permanent formstabil ausgebildet ist und daß im Bereich zwischen Kreisringscheibe (15) und Stirnfläche (3) des Hohlstabs (1) eine kreisförmig umlaufende Einschnürung des Hüllenüberstandes (9) vorhanden ist.

2. Funktionelle Einheit nach Anspruch 1, dadurch gekennzeichnet, daß die Einschnürung durch einen Spannring (27), insbesondere aus elastischem Material, gebildet wird.

3. Insbesondere für die Wurstherstellung geeignete funktionelle Einheit, umfassend einen Hohlstab (1) aus längsweise gerafftem Verpackungsschlauch, einen die äußere Umfangsfläche (2) des Hohlstabs (1) unter Freilassung von dessen Hohlraummündungen (5) umgebenden Stützbehälter, der aus einer schlauchförmigen thermoplastischen Kunststoffhülle besteht und dessen jeweiliges Ende einen die Länge des Hohlstabs (1) überragenden Hüllenüberstand (10) bildet, und Kreisringscheiben (15) am jeweiligen Ende des Stützbehälters, wobei die an die Stirnflächen (3) des Hohlstabs (1) angrenzenden, auf die äußere Oberfläche des jeweiligen Hüllenüberstands (10) aufgeschobenen Kreisringscheiben (15) von einer Umstülpung des Hüllenüberstands (10) umfaßt sind und die Umstülpung sich vom Bereich der äußeren Umfangskante der Stirnfläche (3) des Hohlstabs (1) über die innere Stirnfläche (18) der Kreisringscheibe (15), durch deren Kreisringöffnung (24) über deren äußere Stirnfläche (17) und deren äußere Umfangsfläche (20) in Richtung zur Hohlstabmitte erstreckt, dadurch gekennzeichnet, daß die um einen Winkel von etwa 90° gekrümmte(n) Biegung(en) (8) des Hüllenüberstandes (10) im Bereich der den äußeren und gegebenenfalls den inneren Umfang der Stützbehälterfrontwand begrenzenden kreisförmigen Kanten durch Überführen in den warmformbaren Zustand und Abkühlen unter Verhinderung einer Formveränderung permanent formstabil ausgebildet ist (sind).

4. Funktionelle Einheit nach einem der Ansprüche 1 bis 3, dadurch gekennzeichnet, daß der Hüllenüberstand (10) im Bereich der Biegung (11) um diejenige Kante der Kreisringöffnung (24) der Kreisringscheibe (15), welche der Stirnfläche (3) des Hohlstabs (1) benachbart ist, und gegebenenfalls im Bereich seiner Biegung (11) um die äußere Umfangskante der Stirnfläche (3) des Hohlstabs (1) durch Warmformung permanent formstabil ausgebildet ist.

5. Funktionelle Einheit nach einem der Ansprüche 1 bis 4, dadurch gekennzeichnet, daß das Ende (9) des Hüllenüberstands (10) auf dem Stützbehältermantel (7), der den Hohlstab (1) umgibt, anliegt und gegebenenfalls mit diesem durch Schweißen oder Siegeln verbunden ist.

6. Funktionelle Einheit nach einem der Ansprüche 1 bis 5, dadurch gekennzeichnet, daß die Kreisringscheibe (15), z. B. über punktartige Flächen (25, 26), insbesondere auf ihrer äußeren und/oder inneren Stirnflächen (17, 18) und gegebenenfalls Umfangsfläche (20) und/oder Kreisringfläche (16) mit der Kunststoffhülle des Stützbehälters durch Schweißen oder Siegeln verbunden ist.

7. Funktionelle Einheit nach einem der Ansprüche 1 bis 6, dadurch gekennzeichnet, daß die den Stützbehälter bildende Kunststoffhülle (6) gitterartig strukturiert ausgebildet ist.

8. Funktionelle Einheit nach einem der Ansprüche 1 bis 7, dadurch gekennzeichnet, daß die den Stützbehälter bildende Kunststoffhülle durch Wärmeeinwirkung auslösbares Schrumpfvermögen besitzt.

9. Funktionelle Einheit nach einem der Ansprüche 3 bis 8, dadurch gekennzeichnet, daß im jeweiligen Bereich zwischen der Kreisringscheibe (15) und der Stirnfläche (3) des Hohlstabs (1) eine kreisförmig umlaufende Einschnürung des Hüllenüberstandes (9) vorhanden ist.

10. Funktionelle Einheit nach Anspruch 9, dadurch gekennzeichnet, daß die Einschnürung durch einen Spannring (27), insbesondere aus elastischem Material, gebildet wird.

11. Verfahren zur Herstellung einer funktionellen Einheit aus einem Hohlstab (1) aus längsweise gerafftem Verpackungsmaterial und einem den Hohlstab umgebenden Stützbehälter nach einem der Ansprüche 3 bis 10, in dem man im Hohlraum einer vorbestimmten Länge schlauchförmiger Hülle aus thermoplastischem, warmformbaren und gegebenenfalls warmverschweißbarem Kunststoff den Hohlstab (1) anordnet, wobei die Länge der schlauchförmigen Hülle derart an die Länge des Hohlstabs (1) angepaßt ist, daß der Hohlstab (1) von Hüllenüberständen (10) überragt wird, auf den jeweiligen Hüllenüberständen (10) eine Kreisringscheibe (15), deren Kreisringdurchmesser geringer ist als der Außendurchmesser der schlauchförmigen Hülle und deren Außendurchmesser dem Hohlstabaußendurchmesser angepaßt ist, in Richtung auf den Hohlstab (1) schiebt und gegen die Stirnfläche (3) des Hohlstabs (1) preßt, den zum Hohlstab (1) längsaxial sich erstreckenden Hüllenüberstand (10) um die äußere Stirnfläche (17) und Umfangsfläche (20) der Kreisringscheibe (15) in Richtung zur Hohlstabmitte umstülpt, dadurch gekennzeichnet, daß man nach dem Umstülpen den jeweiligen Hüllenüberstand (10) im Bereich seiner um einen Winkel von etwa 90° gekrümmten Biegung(en) (8, 11) in den warmformbaren Zustand überführt und im noch warmen Zustand, gegebenenfalls wenigstens punktuell, an die Kreisringscheibe (15), gegebenenfalls auch an die äußere Oberfläche des den Hohlstab (1) umgebenden Stützbehältermantels (7) anpreßt und unter fortdauerndem Anpressen abkühlt.

## Claims

1. Functional unit which is particularly suitable for the production of sausages and comprises a hollow stick (1) comprised of a lengthwise shirred packaging tube ; a support sheathing which surrounds the outer circumferential surface (2) of the hollow stick (1) leaving free the central apertures (5) of the latter, is comprised of a tubular thermoplastic sheathing of a plastic material, and the two ends of which form protruding sheathing ends (10) which are longer than the hollow stick (1) ; and planar disc elements (15) at the two ends of the support sheathing which are adjacent to the front surfaces (3) of the hollow stick (1), are slid over the outer surfaces of the protruding sheathing ends (10) and are each surrounded by a turned-back portion of the respective protruding sheathing end (10), said turned-back portions extending from the outer edges of the front surfaces (3) of the hollow stick (1) over the inner planar surfaces (18) of the planar disc elements (15), through the apertures (24) of the planar disc elements (15), over the outer planar surfaces (17) of the disc elements (15) and over the outer circumferential surfaces (20) of the disc elements (15), in the direction of the middle of the hollow rod (1), said functional unit being characterized in that, in the areas where they are turned back, the protruding sheathing ends (10) have a permanently form-stable configuration produced by heat-forming and in that annular circumferential restrictions of the protruding sheathing ends (9) exist within the area between the respective planar disc elements (15) and the front surfaces (3) of the hollow stick (1).

2. Functional unit as claimed in Claim 1, characterized in that said restriction is caused by a locking ring (27) which in particular is comprised of an elastic material.

3. Functional unit which is particularly suitable for the production of sausages and comprises a hollow stick (1) comprised of a lengthwise shirred packaging tube ; a support sheathing which surrounds the outer circumferential surface (2) of the hollow stick (1) leaving free the central apertures (5) of the latter, is comprised of a tubular thermoplastic sheathing of a plastic material, and the two ends of which form protruding sheathing ends (10) which are longer than the hollow stick (1) ; and planar disc elements (15) at the two ends of the support sheathing, which are adjacent to the front surfaces (3) of the hollow stick (1), are slid over the outer surfaces of the protruding sheathing ends (10) and are each surrounded by a turned-back portion of the respective protruding sheathing end (10), said turned-back portions extending from the outer edges of the front surfaces (3) of the hollow rod (1) over the inner planar surfaces (18) of the planar disc elements (15), over the outer planar surfaces (17) of the disc elements (15) and over the outer circumferential surfaces (20) of the disc elements (15), in the direction of the middle of the hollow stick (1), said functional unit being characterized in that the bent portion(s) (8) of each protruding sheathing end (10), having a bending angle of about 90°, has (have) been given a permanently form-stable configuration in the area of the rounded edges bordering the outer circumference of the front side of the support sheathing, and optionally also in the area of the rounded edges bordering the inner circumference of the front side of the support sheathing, by converting these bends into a heat-formable state and subsequently cooling them down again, while preventing dimensional changes.

4. Functional unit as claimed in any of Claims 1 to 3, characterized in that, in the area of the bend (11) around the edge of the central aperture (24) of the planar disc element (15), which is adjacent to the front surface (3) of the hollow stick (1) and optionally also in the area of the bend (11) around the outer circumferential edge of the front surface (3) of the hollow stick, the protruding sheathing end (10) has been given a permanently formstable configuration by heat-forming.

5. Functional unit as claimed in any of Claims 1 to 4, characterized in that the end (9) of the protruding sheathing end (10) abuts against the outer surface (7) of the support sheathing surrounding the hollow stick (1) and is optionally connected thereto by heat-welding or heat-sealing.

6. Functional unit as claimed in any of Claims 1 to 5, characterized in that the planar disc element (15) is joined by, for example, spot surfaces (25, 26) with the plastic sheathing constituting the support sheathing, by heat-welding or heat-sealing, said spot surfaces (25, 26) being in particular located on the outer and/or inner planar surface (s) (17, 18) and optionally also on the outer circumferential surface (20) of the disc element (15) and/or on the circumferential surface (16) of the central aperture (24) of the disc element.

7. Functional unit as claimed in any of Claims 1 to 6, characterized in that the plastic sheathing (6) constituting the support sheathing has a grid-like structure.

8. Functional unit as claimed in any of Claims 1 to 7, characterized in that the plastic sheathing constituting the support sheathing has a shrinking capability which can be activated by the action of heat.

9. Functional unit as claimed in any of Claims 3 to 8, characterized in that an annular circumferential restriction of the projecting sheathing end (9) exists within the area between the respective planar disc element (15) and the respective front surface (3) of the hollow stick (1).

10. Functional unit as claimed in Claim 10, characterized in that the restriction is comprised of a locking ring which, in particular, is made of an elastic material.

11. Process for the production of a functional unit comprised of a hollow stick (1) made of a lengthwise shirred packaging tube and surrounded by a support sheathing as defined in any of Claims 3 to 10, comprising the steps of : placing the hollow stick (1) in the hollow space of a tubular sheathing having a defined length and being made of a thermoplastic, heat-formable and, if appropriate, heat-weldable plastic material, the length of the tubular sheathing being adapted to the length of the hollow stick (1) in a way such that protruding sheathing ends (10) project from the hollow stick (1) ; sliding a planar disc element (15) over the respective protruding sheathing end (10), in the direction of the hollow stick (1), and pressing the planar disc element (15) against the respective front surface (3) of the hollow stick (1), the diameter of the central aperture of the disc element being smaller than the outer diameter of the tubular sheathing and the outer diameter of the disc element being adapted to the outer diameter of the hollow stick ; and turning back the protruding sheathing end (10) extending in the direction of the longitudinal axis of the hollow stick (1), by bending it around the outer planar surface (17) and the circumferential surface (20) of the planar disc element (15), in the direction of the middle of the hollow stick (1) ; said process being characterized in that, after the turning-back of the respective protruding sheathing end (10), the area(s) of the sheathing end now forming the bend(s) (8, 11) of an angle of 90° each, are converted into a heat-formable state and, while still hot, are pressed against the respective planar disc element (15) and optionally against the outer circumferential surface (7) of the support sheathing, said pressing optionally being performed at least punctually, whereupon cooling-down takes place while continuously exerting pressure.

**Revendications**

1. Unité fonctionnelle utilisée notamment pour la fabrication de saucisses comportant une chenille cylindrique creuse (1) réalisée à partir d'une gaine de rétention plissée longitudinalement, une gaine de renforcement qui enrobe la surface périphérique extérieure (2) de la chenille cylindrique creuse (1) à l'exception de ses ouvertures frontales (5) et qui est constituée d'une gaine tubulaire en matière synthétique thermoplastique, dont chacune des extrémités forme une zone excédentaire (10) dépassant les extrémités frontales de la chenille cylindrique creuse (1), de disques circulaires (15) placés sur chacune des extrémités de la gaine de renforcement tubulaire de manière que les disques circulaires (15), qui sont placés à la hauteur des parois frontales (3) de la chenille cylindrique creuse (1) et qui sont glissés sur la face extérieure de chaque zone excédentaire (10), soient enrobés d'une partie retroussée de cette zone excédentaire (10) qui s'étend de l'arête périphérique extérieure de la paroi frontale (3) de la chenille cylindrique creuse (1) en passant par la paroi frontale intérieure (18) du disque circulaire (15) avant de traverser l'ouverture circulaire centrale (24) de ce disque (15) pour enrober sa paroi frontale extérieure (17) et sa surface périphérique extérieure (20) et se diriger finalement en direction de la partie médiane de la chenille cylindrique creuse (1) cette unité fonctionnelle étant caractérisée en ce que dans la partie retroussée la zone excédentaire (10) a subi un traitement thermique lui conférent une stabilité dimensionnelle permanente et en ce que dans la partie située entre le disque circulaire (15) et la paroi frontale (3) de la chenille cylindrique creuse (1) se trouve un étranglement circulaire de la zone excédentaire (10).

2. Unité fonctionnelle selon la revendication 1, caractérisée en ce que l'étranglement est maintenu à l'aide d'une bague de serrage (27) réalisée notamment dans un matériau élastique.

3. Unité fonctionnelle utilisée notamment pour la fabrication de saucisses comportant une chenille cylindrique creuse (1) réalisée à partir d'une gaine de rétention, plissée longitudinalement, une gaine de renforcement qui enrobe la surface périphérique extérieure (2) de la chenille cylindrique creuse (1) à l'exception de ses ouvertures frontales (5) et qui est constituée d'une gaine tubulaire en matière synthétique thermoplastique dont chacune des extrémités forme une zone excédentaire (10) dépassant les extrémités frontales de la chenille cylindrique creuse (1), de disques circulaires (15) placés sur chacune des extrémités de la gaine de renforcement tubulaire, de manière que ces disques circulaires (15), qui sont placés à la hauteur des parois frontales (3) de la chenille cylindrique creuse (1) et qui sont glissés sur la face extérieure de chaque zone excédentaire (10), soient enrobés d'une partie retroussée de cette zone excédentaire (10) qui s'étend de l'arête périphérique extérieure de la paroi frontale (3) de la chenille cylindrique creuse (1) en passant par la partie frontale intérieure (18) du disque circulaire (15) avant de traverser l'ouverture circulaire centrale (24) de ce disque (15) pour enrober sa paroi frontale extérieure (17) et sa surface périphérique extérieure (20) et se diriger finalement en direction de la partie médiane de la chenille cylindrique creuse (1), cette unité fonctionnelle étant caractérisée en ce que les courbures (8) des zones excédentaires (10) faisant un angle d'environ 90° à la hauteur des arêtes circulaires qui limitent le pourtour extérieur et, le cas échéant, le pourtour intérieur de la paroi avant de la gaine de renforcement tubulaire présentent une stabilité dimensionnelle permanente obtenue en provoquant leur état de déformabilité à chaud et en les laissant refroidir ensuite en évitant pendant le processus toute modification de leur forme.

4. Unité fonctionnelle selon l'une des revendications 1 à 3, caractérisée en ce que, à la hauteur de la courbure (11) qui couvre l'arête de l'ouverture centrale circulaire (24) du disque (15) proche de la paroi frontale (3) de la chenille cylindrique creuse (1) et, le cas échéant, à la hauteur de la courbure (11) qui couvre l'arête périphérique extérieure de la paroi frontale (3) de la chenille cylindrique creuse (1) la zone excédentaire (10) a subi un traitement thermique lui conférant une stabilité dimensionnelle permanente.

5. Unité fonctionnelle selon l'une des revendications 1 à 4, caractérisée en ce que l'extrémité (9) de la zone excédentaire (10) qui s'applique contre le revêtement (7) de la gaine de renforcement qui enrobe la chenille cylindrique creuse (1) est reliée à ce revêtement par un procédé de soudage approprié.

6. Unité fonctionnelle selon l'une des revendications 1 à 5, caractérisée en ce que le disque circulaire (15) est relié à la gaine en matière synthétique du récipient de renforcement tubulaire par des points de soudages (25, 26) réalisés notamment sur la paroi frontale intérieure et/ou la paroi frontale extérieure (17, 18) du disque et, le cas échéant, sur la surface périphérique (20) de ce disque (15) et/ou sur la face circonférentielle (16) de l'ouverture centrale circulaire.

7. Unité fonctionnelle selon l'une des revendications 1 à 6, caractérisée en ce que la gaine en matière synthétique (6) constituant le récipient de renforcement présente une structure en forme de grille.

8. Unité fonctionnelle selon l'une des revendications 1 à 7, caractérisée en ce que la gaine en matière synthétique (6) constituant le récipient de renforcement est rétractable sous l'effet de la chaleur.

9. Unité fonctionnelle selon l'une des revendications 3 à 8, caractérisée en ce qu'entre chaque disque circulaire (15) et la paroi frontale (3) correspondante de la chenille cylindrique creuse se trouve un étranglement circulaire de la zone excédentaire (9).

10. Unité fonctionnelle selon la revendication 9, caractérisée en ce que l'étranglement est provoqué par une bague de serrage (27), notamment en matériau élastique.

11. Procédé en vue de la fabrication d'une unité fonctionnelle composée d'une chenille cylindrique creuse (1) réalisée à partir d'une gaine de rétention souple plissée longitudinalement et d'un récipient de renforcement enrobant la chenille cylindrique creuse selon l'une des revendications 3 à 10, lequel récipient est constitué d'une gaine tubulaire d'une longueur déterminée réalisée dans un matériau synthétique thermoplastique, déformable à chaud et le cas échéant soudable à chaud, dont la longueur est adaptée à la longueur de la chenille cylindrique creuse (1) de manière qu'elle dépasse les extrémités de cette chenille creuse (1) d'une longueur excédentaire (10) donnée, sur laquelle un disque circulaire (15) dont le diamètre intérieur est inférieur au diamètre extérieur de la gaine tubulaire et dont le diamètre extérieur est adapté au diamètre extérieur de la chenille cylindrique creuse est glissé en direction de la chenille cylindrique creuse (1) et appliqué ainsi contre la paroi frontale (3) de la chenille cylindrique creuse (1) avant que la zone excédentaire (10), s'étendant dans le sens de l'axe longitudinal de la chenille cylindrique creuse soit retroussée par-dessus la paroi frontale extérieure (17) et la surface périphérique (20) du disque circulaire (15) en direction de la partie médiane de la chenille cylindrique creuse (1), ce procédé étant caractérisé en ce que, à l'issue du retroussage, on provoque sur la zone excédentaire (10) et plus précisément à la hauteur des courbures de 90° (8, 11), un état de déformabilité à chaud pendant lequel l'on presse, au moins d'une manière ponctuelle, les parties de cette zone excédentaire (10) ainsi traitées contre le disque circulaire (15) et le cas échéant contre la face extérieure du revêtement (7) de la chenille cylindrique creuse (1) et en ce qu'on laisse finalement refroidir les zones traitées tout en y maintenant la pression d'appui.

*Fig. 2*

*Fig. 3*

*Fig. 1*

*Fig. 4*

0 021 189

Fig. 5

2